# EUROPÄISCHE PATENTSCHRIFT

(11) **EP 2 824 281 B1**
(45) Veröffentlichungstag und Bekanntmachung des Hinweises auf die Patenterteilung: **19.07.2017**
(21) Anmeldenummer: 14166292.4
(22) Anmeldetag: 29.04.2014
(51) Int. Cl.: F01D 11/00, F01D 21/04, F16J 15/32, F16J 15/3288, F01D 11/02, F01D 25/28, F16J 15/44

(54) **Strömungsmaschine**
Turbomachine
Turbomachine

(30) Priorität: 09.07.2013 DE 102013213386
(43) Veröffentlichungstag der Anmeldung: 14.01.2015
(73) Patentinhaber: MTU Aero Engines AG, 80995 München (DE)
(72) Erfinder: Schinko, Norbert, 81373 München (DE); Sangl, Janine, Dachau 85221 (DE); Klän, Stephan, 10707 Berlin (DE); Schlemmer, Markus, 84048 Mainburg / Wambach (DE)

(56) Entgegenhaltungen:
- EP-A1- 0 185 603
- EP-A2- 1 918 531
- DE-A1-102004 033 924
- DE-T2- 60 217 456
- DE-T2- 69 907 859

## Beschreibung

Die Erfindung betrifft eine Strömungsmaschine mit einem Keramikbauteil nach dem Oberbegriff des Anspruchs 1, wie aus der Druckschrift DE 602 17 456 T2 bekannt ist.

Aus den Druckschriften EP 1 918 531 A2 und DE 10 2004 033 924 A1 sind Keramikbauteile bekannt, die derart ausgestaltet sind, dass sie zerstört werden, sobald diese mit einem sich bewegenden Bauteil der Strömungsmaschine berührt werden.

Beim Auftreten bestimmter Fehlerfälle in Strömungsmaschinen ist mit gewissen Auslenkungen einzelner Bauteile zu rechnen, wie etwa Auslenkungen von Wellen der Strömungsmaschine in radialer Richtung. Um bei einer Auslenkung solcher Bauteile deren Beschädigung oder gar Zerstörung zu verhindern, die durch eine Kontaktierung weiterer, daran angrenzender Bauteile auftreten kann, werden vorbestimmte Mindestabstände zwischen den einzelnen Bauteilen eingehalten.

So besteht beispielsweise an Engstellen zwischen Rotorwellen und Statorbauteilen die Gefahr, dass die Statorbauteile rotierende Komponenten bei einer Berührung beschädigen, sollte der Rotor aufgrund eines Fehlerfalls stark exzentrisch ausgelenkt werden. Durch die hohe Drehzahl des Rotors kann bereits bei einem kurzzeitigen Kontakt mit den oftmals scharfkantigen Statorbauteilen eine Durchtrennung des Rotors stattfinden. Kontaktierungen von sich relativ zueinander bewegenden Bauteilen gilt es demnach auf jeden Fall zu verhindern. Daher werden die unbewegten Komponenten von Statoren weit zurückgeschnitten, um auch im Falle extremer Auslenkungen des Rotors eine Kontaktierung zwischen statorseitigen und rotorseitigen Komponenten zu verneiden.

Aus der US 6077038, der US 5688105, der US 5927721 und der US 5794938 sind Dichtungsabschnitte bekannt, deren Bürstendichtungen mittels Halterungen positioniert werden. Diese Halterungen weisen einen vorbestimmten Abstand zu den entsprechenden Wellen auf, so dass selbst bei einer möglichen radialen Auslenkung der Welle stets nur eine Kontaktierung der Welle durch die flexiblen Bürstendichtungen selbst stattfindet.

Da die zu erreichende Dichtwirkung solcher Dichtelemente jedoch davon abhängt, wie weit die sich relativ zueinander bewegenden und einen abzudichtenden Freiraum begrenzenden Bauteile voneinander beabstandet sind, gilt es einen Kompromiss zu finden zwischen einer maximal möglichen Dichtwirkung und der Sicherheit gegen Beschädigung oder Zerstörung.

Die Aufgabe der vorliegenden Erfindung ist es, den Abstand zwischen zwei sich relativ zueinander bewegenden Bauteilen auf ein Minimum zu reduzieren, ohne bei einem Fehlerfall eine Beschädigung oder gar Zerstörung bestimmter Bauteile zu riskieren.

Diese Aufgabe wird durch den Gegenstand des unabhängigen Patentanspruchs gelöst. Dabei bilden die in den Unteransprüchen definierten Merkmale die vorliegende Erfindung vorteilhaft weiter.

Gemäß der vorliegenden Erfindung wird für eine Strömungsmaschine ein Keramikbauteil vorgesehen, welches ausgestattet ist, als Folge einer Kontaktierung mit einem anderen, sich relativ zum Keramikbauteil bewegenden Strömungsmaschinen-Bauteil zerstört zu werden.

Bei der vorliegenden Erfindung wurde nämlich erkannt, dass sich Keramiken aufgrund ihrer Sensitivität gegenüber bestimmten Belastungen besonders gut zur Herstellung von Strömungsmaschinen-Komponenten eignen, die zur Vermeidung kontaktbedingter Beschädigungen oder Zerstörungen von sicherheitskritischen Komponenten gezielt zerstört werden sollen. Somit kann durch den Einsatz keramischer Werkstoffe der Abstand zwischen zwei sich relativ zueinander bewegenden Bauteilen auf ein Minimum reduziert werden, ohne bestimmte Sicherheitskriterien zu verletzen.

Erfindungsgemäß ist das Keramikbauteil ein unbewegtes Bauteil der Strömungsmaschine und behält im eingebauten Zustand seine Lage innerhalb der Strömungsmaschine bei. Das sich relativ zum keramischen Bauteil bewegende Bauteil bewegt sich somit auch relativ zur gesamten Strömungsmaschine. Das sich bewegende Bauteil der Strömungsmaschine ist ein rotatorisch bewegtes Bauteil, das eine Welle ist.

Erfindungsgemäß umgrenzt das Keramikbauteil einen Durchgang für das sich bewegende Bauteil zumindest teilweise. So kann das Keramikbauteil beispielsweise ringförmig ausgeformt sein und einen Wellendurchgang somit umfänglich umgrenzen. Es ist jedoch ebenso vorstellbar, dass das Keramikbauteil den Durchgang nur teilweise, also nur zusammen mit anderen Bauteilen umgrenzt, die beispielsweise als Gesamtes einen Ring formen können. Der Begriff Umgrenzen ist hier so zu verstehen, dass die den Durchgang umgrenzenden Bauteile jeweils genau die Bauteile darstellen, welche am Weitesten an das sich relativ dazu bewegende Bauteil heranreichen und somit bei einer Auslenkung des sich bewegenden Bauteils als erstes kontaktiert werden würden.

Erfindungsgemäß bildet der Wellendurchgang einen Dichtabschnitt und umfasst eine Bürstendichtung, wobei das Keramikbauteil mit der Halteeinrichtung für die Dichtung verbunden ist oder Teil der Halteinrichtung ist. Wie weiter oben schon erläutert, können solche Dichtabschnitte Bürstendichtungen aufweisen, welche die Welle kontaktieren. Eine Kontaktierung der Welle mit allen anderen Bauteilen des Dichtabschnitts ist, sollten diese durch ihr Bruchverhalten nicht sofort zerstört werden können, unbedingt zu verhindern. Daher sind gemäß der vorliegenden Erfindung -abgesehen von der Bürstendichtung selbst- alle im Verformungsbereich der Welle befindlichen Bauteile, die im Falle eines Fehlerfalls von der Welle kontaktiert werden könnten, Keramikbauteile und können als Folge einer Kontaktierung aufgrund ihrer Sprödheit zerstört werden.

Um das Zerstör- bzw. Bruchverhalten des Keramikbauteils zu beeinflussen, ist es ferner vorstellbar, dass das Keramikbauteil zumindest eine Schwächungszone mit reduzierter Festigkeit aufweist. Sollte es zu einem Kontakt zwischen dem Keramikbauteil und dem sich relativ dazu bewegenden Bauteil und einer damit einhergehenden Belastung des Keramikbauteils kommen, bewirkt die reduzierte Festigkeit in der Schwächungszone ein gezieltes Versagen des Keramikbauteils in der Schwächungszone. Es ist vorstellbar, dass das Keramikbauteil hierfür innerhalb der Schwächungszone eine reduzierte Materialstärke aufweist, was automatisch zu einer reduzierten Festigkeit in der Schwächungszone führt. Alternativ oder zusätzlich hierzu kann das Keramikbauteil so ausgestaltet sein, dass es bei der Kontaktierung in der Schwächungszone eine erhöhte Beanspruchung erfährt, insbesondere eine Biege-, Scher- und/oder Zugbeanspruchung. Dies kann beispielsweise durch eine Formgebung des Keramikbauteils innerhalb der Schwächungszone realisiert werden, die sich von der Formgebung des Keramikbauteils außerhalb der Schwächungszone unterscheidet. So kann sich etwa die Erstreckungsrichtung innerhalb der Schwächungszone von der Erstreckungsrichtung außerhalb der Schwächungszone unterscheiden. Im Speziellen ist eine Biegebeanspruchung des Keramikbauteils innerhalb der Schwächungszone vorstellbar, wobei außerhalb der Schwächungszone lediglich eine Druckbeanspruchung vorliegt, gegen die das Keramikbauteil eine erhöhte Resistenz aufweist.

Generell kann das Keramikbauteil so ausgestaltet sein, dass dessen Versagen bzw. dessen Zerstörung erst ab einer vorbestimmten Beanspruchungsstärke eintritt, die allerdings stets unter dem Wert liegen muss, ab welchem mit einer Beschädigung des zu schützenden Bauteils zu rechnen ist.

Bevorzugterweise ist das Keramikbauteil gänzlich aus einer Keramik gefertigt. Allerdings ist es ebenso vorstellbar, dass lediglich einzelne Teilbereiche das Keramikbauteils aus einem Keramikwerkstoff bestehen, die bei Ihrem Versagen eine Zerstörung des Keramikbauteils als Ganzes bewirken. Bevorzugterweise kommt als Keramikwerkstoff ein monokristallinier und/oder ein faserverstärkter Keramikwerkstoff zum Einsatz.

Bevorzugterweise ist das Keramikbauteil innerhalb einer Bauteilpaarung ausgestaltet, als Folge einer Kontaktierung mit dem sich dazu bewegenden Bauteil zerstört zu werden, bevor das sich bewegende Bauteil aufgrund der Kontaktierung Schaden nimmt. Bei einem bekannten Schadverhalten des sich bewegenden Bauteils kann die Zerstörschwelle des Keramikbauteils konstruktiv genau so festgelegt werden, dass es bei einer Kontaktierung des sich bewegenden Bauteils mit dem Keramikbauteil niemals zu einer Beschädigung oder gar Zerstörung des sich bewegenden Bauteils kommen kann und stets nur das Keramikbauteil zerstört wird.

Die erfindungsgemäße Strömungsmaschine kann eine Gasturbine sein und ein wie oben beschriebenes Keramikbauteil oder eine wie oben beschriebene Bauteilpaarung umfassen.

Die vorliegende Erfindung wird im Folgenden unter Bezugnahme auf die beiliegende Zeichnung näher erläutert. Die Erfindung kann die hierin beschriebenen Merkmale einzeln sowie in jedweder sinnvollen Kombination umfassen.

Es zeigt:

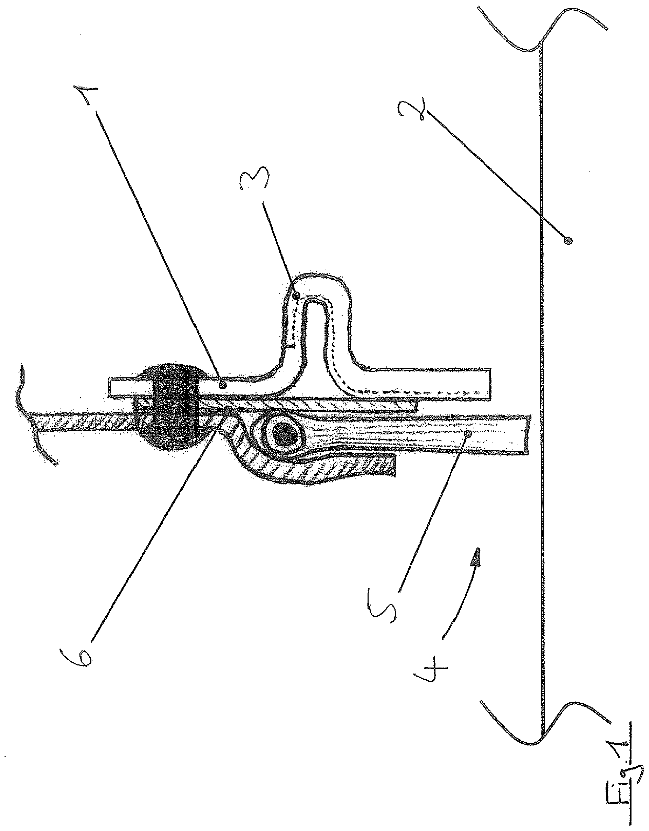

- Figur 1:: Einen erfindungsgemäß ausgestalteten Dichtungsabschnitt einer Strömungsmaschinenwelle.

Der in der Figur 1 gezeigte Dichtungsabschnitt umfasst ein Keramikbauteil 1, welches mit der Halteeinrichtung 6 für die Bürstendichtung 5 vernietet und als ringförmiger Körper ausgestaltet ist um den Wellendurchgang 4 umfänglich zu umgrenzen. Im normalen Betriebszustand wird die sich um eine horizontal verlaufende Rotationsachse drehende Welle 2 einzig von der mittels der Halteeinrichtung 6 fixierten Bürstendichtung 5 kontaktiert, die den zwischen der Welle 2 und der Halteeinrichtung 6 gebildeten Ringspalt 4 abdichtet. Zur Erhöhung der Dichtwirkung der Bürstendichtung 5 wird der Ringspalt 4 mittels des Keramikbauteils 1 in seiner radialen Erstreckung verkleinert.

Sollte es aufgrund eines Fehlerfalls innerhalb der Strömungsmaschine zu einer radialen Auslenkung der Welle 2 kommen, ist die Halteeinrichtung 6 so weit zurückgeschnitten, dass nicht mit einer Kontaktierung der Welle 2 mit der Halteeinrichtung 6 gerechnet werden muss. Allerdings darf es erfindungsgemäß zu einem Kontakt zwischen der Welle 2 und dem Keramikbauteil 1 kommen, da dieses aufgrund seines spröden Bruchverhaltens sofort zerstört werden würde, noch bevor es zu einem Schaden an der Welle 2 kommt.

Um das Bruchverhalten des Keramikbauteils gezielt zu beeinflussen, weist dieses eine Schwächungszone 3 mit einer reduzierten Materialstärke auf, was in der Figur 1 mit der gestrichelten Linie angedeutet wird. Ferner ist zu sehen, dass das Keramikbauteil 1 in der Schwächungszone 3 eine von der normalerweise radialen Erstreckungsrichtung abweichende Erstreckungsrichtung parallel zur Rotationsachse der Welle 2 aufweist. Es ist leicht vorstellbar, dass eine radiale Auslenkung der Welle 2 in den sich in radialer Richtung erstrecken Bereichen des Keramikbauteils 1 zu einer Druckbelastung des Keramikbauteils 1 führt, in den sich axial erstreckenden Bereichen hingegen zu einer Biegebeanspruchung. Diese Biegebeanspruchung der Keramik ist es, welche zu einem Versagen des Keramikbauteils 1 führt, sollte es zu einer Kontaktierung mit der Welle kommen.

## Patentansprüche

1. Strömungsmaschine umfassend ein Keramikbauteil und ein sich relativ zum Keramikbauteil (1) bewegendes Bauteil (2), wobei das Keramikbauteil (1) ausgestaltet ist, als Folge einer Kontaktierung mit dem anderen, sich relativ zum Keramikbauteil (1) bewegenden Bauteil (2) der Strömungsmaschine zerstört zu werden, wobei das Keramikbauteil (1) ein unbewegtes Bauteil der Strömungsmaschine ist und das sich relativ dazu bewegende Bauteil (2) ein rotatorisch bewegtes Bauteil ist, wobei die Strömungsmaschine einen Durchgang (4) für die Welle (2) der Strömungsmaschine umfasst und das Keramikbauteil (1) den Durchgang (4) zumindest teilweise umgrenzt, wobei der Durchgang (4) einen Dichtabschnitt bildet und eine Dichtung (5) umfasst und wobei die Strömungsmaschine eine Halteeinrichtung (6) für die Dichtung (5) umfasst und das Keramikbauteil (1) mit der Halteeinrichtung (6) verbunden ist oder Teil der Halteeinrichtung (6) ist, **dadurch gekennzeichnet, dass** das rotatorisch bewegte Bauteil (2) eine Welle ist und dass die Dichtung (5) eine Bürstendichtung ist.

2. Strömungsmaschine gemäß Anspruch 1, wobei das Keramikbauteil (1) zumindest eine Schwächungszone (3) mit reduzierter Festigkeit aufweist.

3. Strömungsmaschine gemäß Anspruch 2, wobei das Keramikbauteil (1) innerhalb der Schwächungszone (3) eine reduzierte Materialstärke aufweist.

4. Strömungsmaschine gemäß einem der Ansprüche 2 oder 3, wobei das Keramikbauteil (1) so ausgestaltet ist, dass es bei der Kontaktierung in der Schwächungszone (3) eine erhöhte Beanspruchung erfährt, insbesondere eine Biege-, Scher- und/oder Zugbeanspruchung.

5. Strömungsmaschine gemäß einem der Ansprüche 1 bis 4, wobei das Keramikbauteil (1) einen monokristallinen und/oder einen faserverstärkten Keramikwerkstoff umfasst, insbesondere aus einem dieser Werkstoffe gefertigt ist.

6. Strömungsmaschine gemäß einem der Ansprüche 1 bis 5, wobei das Keramikbauteil (1) ausgestaltet ist, als Folge einer Kontaktierung mit dem sich bewegenden Bauteil (2) zerstört zu werden, bevor das sich bewegende Bauteil (2) aufgrund der Kontaktierung Schaden nimmt.

## Claims

1. A turbomachine comprising a ceramic component and a component (2), which is moving with respect to the ceramic component (1), wherein the ceramic component (1) is configured to be destroyed due to contacting the other component (2) of the turbomachine, which is moving with respect to the ceramic component (1), wherein the ceramic component (1) is a stationary component of the turbomachine and the component (2), which is moving with respect to it, is a rotationally movable component, wherein the turbomachine comprises a passage (4) for the shaft (2) of the turbomachine and the ceramic component (1) at least partially defines the passage (4), wherein the passage (4) forms a sealing portion and comprises a sealing (5) and wherein the turbomachine comprises a mounting device (6) for the sealing (5) and the ceramic component (1) is connected to the mounting device (6) or is part of the mounting device (6), **characterized in that** the rotationally movable component (2) is a shaft and that the sealing (5) is a brush sealing.

2. The turbomachine according to claim 1, wherein the ceramic component (1) has at least one weakening zone (3) of reduced resistance.

3. The turbomachine according to claim 2, wherein the ceramic component (1) has a reduced material thickness within the weakening zone (3).

4. The turbomachine according to claim 2 or 3, wherein the ceramic component (1) is configured so that it experiences a higher stress during contact in the weakening zone (3), in particular a bending, shearing and/or tensile stress.

5. The turbomachine according to any of claims 1 to 4, wherein the ceramic component (1) comprises a monocrystalline and/or a fiber-reinforced ceramic material, in particular is made of one of these materials.

6. The turbomachine according to any of claims 1 to 5, wherein the ceramic component (1) is configured to be destroyed due to contacting the moving component (2), before the moving component (2) is damaged due to the contacting.

## Revendications

1. Turbomachine comprenant un composant de céramique et un composant (2) se déplaçant par rapport au composant de céramique (1), dans laquelle le composant de céramique (1) est conçu pour être détruit à la suite d'un contact avec l'autre composant (2) de la turbomachine se déplaçant par rapport au composant de céramique (1), dans laquelle le composant de céramique (1) est un composant stationnaire de la turbomachine et le composant (2) qui se déplace par rapport à celui-ci est un composant entraîné en rotation, dans laquelle la turbomachine comprend un passage (4) pour l'arbre (2) de la turbomachine et le composant de céramique (1) délimite en moins en partie le passage (4), dans laquelle le passage (4) forme une section étanche et comprend un joint étanche (5) et dans laquelle la turbomachine comprend un dispositif de retenue (6) pour le joint étanche (5) et le composant de céramique (1) est lié au dispositif de retenue (6) ou fait partie du dispositif de retenue (6), **caractérisée en ce que** le composant entraîné en rotation (2) est un arbre et le joint étanche (5) est un joint étanche à balai.

2. Turbomachine selon la revendication 1, **caractérisée en ce que** le composant de céramique (1) présente au moins une zone d'affaiblissement (3) de solidité réduite.

3. Turbomachine selon la revendication 2, **caractérisée en ce que** le composant de céramique (1) présente une épaisseur de matériau réduite dans la zone d'affaiblissement (3).

4. Turbomachine selon l'une quelconque des revendications 2 ou 3, **caractérisée en ce que** le composant de céramique (1) est conçu de sorte qu'il soit soumis à une sollicitation élevée lors du contact dans la zone d'affaiblissement (3), en particulier une sollicitation à la flexion, au cisaillement et/ou à la traction.

5. Turbomachine selon l'une quelconque des revendications 1 à 4, **caractérisée en ce que** le composant de céramique (1) comprend un matériau de type céramique monocristallin et/ou renforcé par des fibres, en particulier fabriqué à partir d'un de ces matériaux.

6. Turbomachine selon l'une quelconque des revendications 1 à 5, **caractérisée en ce que** le composant de céramique (1) est conçu pour être détruit à la suite d'un contact avec le composant mobile (2) avant que le composant mobile (2) ne soit soumis à des dommages en raison du contact.
